(19) **Europäisches Patentamt**
**European Patent Office**
**Office européen des brevets**

(11) **EP 4 636 691 A1**

(12) **EUROPEAN PATENT APPLICATION**
published in accordance with Art. 153(4) EPC

(43) Date of publication:
   **22.10.2025 Bulletin 2025/43**

(21) Application number: **23902416.9**

(22) Date of filing: **20.11.2023**

(51) International Patent Classification (IPC):
   **G06T 7/246** (2017.01)

(52) Cooperative Patent Classification (CPC):
   **G06T 7/246; G06T 7/66; G06T 7/70**

(86) International application number:
   **PCT/CN2023/132630**

(87) International publication number:
   **WO 2024/125217 (20.06.2024 Gazette 2024/25)**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(30) Priority: **14.12.2022 CN 202211608969**

(71) Applicant: **Beijing Zitiao Network Technology Co.,
   Ltd.**
   **Beijing 100190 (CN)**

(72) Inventor: **WANG, Hui**
   **Beijing 100028 (CN)**

(74) Representative: **Marks & Clerk LLP**
   **15 Fetter Lane**
   **London EC4A 1BW (GB)**

(54) **LIGHT SPOT TRACKING METHOD AND APPARATUS, AND ELECTRONIC DEVICE AND STORAGE MEDIUM**

(57) The present disclosure provides a light spot tracking method, apparatus, an electronic device, and a storage medium, the method comprising: extracting an eye image of a target frame and an eye image of a to-be-detected frame from an eye image sequence, wherein the eye image of the target frame contains a light spot, and the acquisition time of the eye image of the target frame is earlier than the acquisition time of the eye image of the to-be-detected frame; acquiring a local detection area from the eye image of the to-be-detected frame based on the light spot; and determining a light spot recognition result of the eye image of the to-be-detected frame in response to a pixel brightness judgment result of a first target position located in the local detection area, wherein the first target position is a position with the highest brightness in the local detection area.

extracting an eye image of a target frame and an eye image of a to-be-detected frame from an eye image sequence, wherein the eye image of the target frame contains a light spot, and the acquisition time of the eye image of the target frame is earlier than the acquisition time of the eye image of the to-be-detected frame; — 101

acquiring a local detection area from the eye image of the to-be-detected frame based on the light spot; — 102

determining a light spot recognition result of the eye image of the to-be-detected frame in response to a pixel brightness judgment result of a first target position located in the local detection area, wherein the first target position is a position with the highest brightness in the local detection area — 103

Fig.1

**Description**

**CROSS-REFERENCE TO RELATED APPLICATIONS**

The present application is based on and claims priority to the Chinese Patent Application No. 202211608969.8 filed on December 14, 2022, the disclosure of which is incorporated by reference herein in its entirety.

**TECHNICAL FIELD**

The present disclosure relates to the technical field of image processing, and in particular to a light spot tracking method, apparatus, an electronic device and a storage medium.

**BACKGROUND**

With the development of virtual reality technology, accurate pupil distance is an important parameter of virtual reality (VR) devices. Appropriate pupil distance can not only make users experience clear images, but also provide the effect of immersive stereoscopic visual depth perception.
When measuring the pupil distance, it is necessary to accurately detect a light spot position on the iris, and then determine a pupil distance parameter using the light spot position, so that the VR devices can adjust a distance between two lenses based on the pupil distance parameter, thus ensuring the users to have a good visual experience. However, when performing light spot detection, it is necessary to acquire a user's eye image sequence and perform a global search on the eye image sequence, which results in the problems of large amount of computing and high power consumption.

**SUMMARY**

According to one aspect of the present disclosure, is provided a light spot tracking method, comprising:

extracting an eye image of a target frame and an eye image of a to-be-detected frame from an eye image sequence, wherein the eye image of the target frame contains a light spot, and the acquisition time of the eye image of the target frame is earlier than the acquisition time of the eye image of the to-be-detected frame;
acquiring a local detection area from the eye image of the to-be-detected frame based on the light spot;
determining a light spot recognition result of the eye image of the to-be-detected frame in response to a pixel brightness judgment result of a first target position located in the local detection area, wherein the first target position is a position with the highest brightness in the local detection area.

According to another aspect of the present disclosure, is provided a light spot tracking apparatus, comprising:

an extraction module configured to extract an eye image of a target frame and an eye image of a to-be-detected frame from an eye image sequence, wherein the eye image of the target frame contains a light spot, and the acquisition time of the eye image of the target frame is earlier than the acquisition time of the eye image of the to-be-detected frame;
an acquisition module configured to acquire a local detection area from the eye image of the to-be-detected frame based on the light spot;
a recognition module configured to determine a light spot recognition result of the eye image of the to-be-detected frame in response to a pixel brightness judgment result of a first target position located in the local detection area, wherein the first target position is a position with the highest brightness in the local detection area.

According to another aspect of the present disclosure, is provided an electronic device, comprising:

at least one processor; and,
a memory storing a program;
wherein the program includes instructions, which, when executed by the processor, cause the processor to perform the method according to an exemplary embodiment of the present disclosure.

According to another aspect of the present disclosure, is provided a non-transitory computer-readable storage medium storing computer instructions, wherein the computer instructions are configured to cause the computer to perform the method according to an exemplary embodiment of the present disclosure.

## BRIEF DESCRIPTION OF THE DRAWINGS

Further details, features and advantages of the present disclosure are disclosed in the following description of exemplary embodiments in conjunction with the accompanying drawings, in which:

FIG. 1 shows a flow chart of a light spot tracking method according to an exemplary embodiment of the present disclosure;

FIG. 2A shows a schematic diagram of a light spot recognition and judgment principle of an exemplary embodiment of the present disclosure;

FIG. 2B shows a schematic diagram of another light spot recognition principle of an exemplary embodiment of the present disclosure;

FIG. 3A shows schematic diagram 1 of a light spot tracking process of an eye video sequence of an exemplary embodiment of the present disclosure;

FIG. 3B shows schematic diagram 2 of the light spot tracking process of an eye video sequence of an exemplary embodiment of the present disclosure;

FIG. 4 shows a schematic diagram of a coordinate system of a local detection area of an exemplary embodiment of the present disclosure;

FIG. 5 shows a functional schematic block diagram of a light spot tracking apparatus according to an exemplary embodiment of the present disclosure;

FIG. 6 shows a schematic block diagram of a chip according to an exemplary embodiment of the present disclosure;

FIG. 7 shows a structural block diagram of an exemplary electronic device that can be configured to implement an embodiment of the present disclosure.

## DETAILED DESCRIPTION

Embodiments of the present disclosure will be described in more detail below with reference to the accompanying drawings. Although certain embodiments of the present disclosure are shown in the drawings, it should be understood that the present disclosure can be implemented in various forms and should not be construed as limited to the embodiments set forth herein. Instead, these embodiments are provided to provide a more thorough and complete understanding of the present disclosure. It should be understood that the drawings and embodiments of the present disclosure are only used for illustrative purposes and are not used to limit the protection scope of the present disclosure.

It should be understood that the various steps recited in method embodiments of the present disclosure may be executed in different orders and/or in parallel. Furthermore, the method embodiments may include additional steps and/or omit performing illustrated steps. The scope of the present disclosure is not limited in this respect.

The term "comprise" and variations thereof as used herein are open inclusions, i.e., "comprising but not limited to". The term "based on" means "based at least in part on." The term "one embodiment" means "at least one embodiment"; the term "another embodiment" means "at least one additional embodiment"; the term "some embodiments" means "at least some embodiments". Relevant definitions of other terms are given in the following description. It should be noted that the concepts such as "first" and "second" mentioned in the present disclosure are only used to distinguish different devices, modules or units, and are not used to limit the order or interdependence of the functions performed by these devices, modules or units.

It should be noted that the modifications of "one" and "plurality" mentioned in the present disclosure are illustrative rather than restrictive, and those skilled in the art should understand that unless otherwise clearly indicated in the context, it should be understood as "one or more".

The names of the messages or information exchanged between multiple devices in the embodiments of the present disclosure are only used for illustrative purposes and are not used to limit the scope of these messages or information.

For display devices, such as virtual reality (VR) glasses, the pupil distance needs to be adjusted for different users. Only with the appropriate pupil distance can the appropriate object distance and image distance be obtained, and only with the appropriate object distance and image distance can the users see the images formed on the screen of the display devices clearly. Therefore, in order to obtain accurate pupil distance, it is necessary to accurately detect and locate a light spot position on the iris, which is crucial to determining the pupil distance parameter.

In the related art, the light spot position can be detected in the entire eye image by any method such as pixel brightness retrieval, whole image gradient, image heat map, etc. It can be seen that when performing light spot detection, it is necessary to perform a global search on the eye image, which results in the problems of large amount of computing and high power consumption. Especially for mobile devices, high power consumption means fast battery consumption, which is not conducive to endurance and causes the mobile devices to easily heat up.

In view of the above problems, an exemplary embodiment of the present disclosure provides a light spot tracking method, which, using the inter-frame moving characteristics of a light spot, performs local light spot detection on an eye image of a to-be-detected frame while ensuring the accuracy of light spot detection, so as to avoid global search for the light spot in the image, thereby reducing the amount of computing and device power consumption, and improving the endurance of the mobile devices.

One or more technical solutions provided in the embodiments of the present disclosure, taking into account the situation where the inter-frame light spot moving distance is short, obtain a local detection area from an eye image of a to-be-detected frame based on a light spot contained in an eye image of a target frame, thereby reducing the light spot detection range of the eye image of the target frame. On this basis, a position with the highest brightness in the local detection area can be set as a first target position, and then a light spot recognition result of the eye image of the to-be-detected frame can be determined based on a pixel brightness judgment result of the first target position, so as to determine whether the light spot is tracked in the eye image of the to-be-detected frame. It can be seen that the method of the exemplary embodiment of the present disclosure, when performing light spot tracking, using the inter-frame moving characteristics of a light spot, performs local light spot detection on the eye image of the to-be-detected frame while ensuring the accuracy of light spot detection, so as to avoid performing light spot detection on the image by means of global search. Based on this, the method of the exemplary embodiment of the present disclosure can reduce the amount of computing and device power consumption and improve the endurance of mobile devices, while ensuring the accuracy of light spot detection.

The method of the exemplary embodiment of the present disclosure may be performed by an electronic device or a chip of the electronic device, where the electronic device has a camera or a video camera or has an image acquisition function. The electronic device can be a smart phone (such as an Android phone, an iOS phone), a wearable device, an augmented reality (AR)\virtual reality (VR) device, an ultra-mobile personal computer (UMPC), a netbook, a personal digital assistant (PDA), a tablet computer, a palmtop computer, and a mobile internet device (MID) and other devices that use flash memory devices. The electronic device is equipped with a camera, which may be a monocular camera, a binocular camera, etc., and the images acquired by the camera may be grayscale images, color images, thermal images, etc., but are not limited thereto.

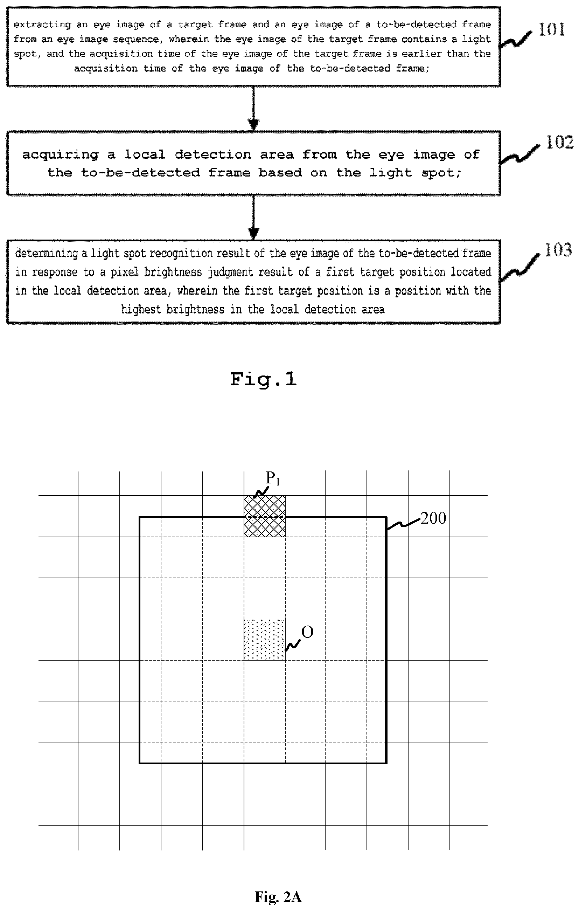

FIG. 1 shows a flow chart of a light spot tracking method according to an exemplary embodiment of the present disclosure. As shown in FIG. 1, the light spot tracking method of the exemplary embodiment of the present disclosure may comprise:

Step 101: extracting an eye image of a target frame and an eye image of a to-be-detected frame from an eye image sequence, wherein the eye image of the target frame contains a light spot, and the acquisition time of the eye image of the target frame is earlier than the acquisition time of the eye image of the to-be-detected frame. The number of the light spots here can be one or more.

The eye image of the target frame in the exemplary embodiment of the present disclosure may be an eye image of a first frame in the eye image sequence, or may be an eye image of other frame. The eye image of the target frame and the eye image of the to-be-detected frame may be eye images of adjacent frames or eye images of alternate frames.

When the eye image of the target frame and the eye image of the to-be-detected frame are eye images of adjacent frames, the eye image of the target frame may be an eye image of the k-th frame, the adjacent frame may be an eye image of the (k+1)-th frame, where k is an integer greater than or equal to 1. When the eye image of the target frame and the eye image of the to-be-detected frame are eye images of alternate frames, the eye image of the target frame may be an eye image of the k-th frame, and the eye image of the to-be-detected frame is an eye image of the (k+r)-th frame, where k is an integer greater than or equal to 1, and r is an integer greater than or equal to 2. For example: r=2~4. At this time, it can be ensured that the image of the target frame and the image of the to-be-detected frame are two frames in the eye image sequence that are acquired when the eyeball moves in a single direction, making it convenient to determine an area of a local detection area in the eye image of the to-be-detected frame according to inter-frame moving characteristics, thereby ensuring the accuracy of the determined local detection area and improving the success rate of light spot recognition.

In practical applications, the eye image sequence in the exemplary embodiment of the present disclosure may include an image eye image sequence of a plurality of frames, and, for example, may be a video file including eyes of a target object acquired by an image acquisition device. The eye images in the exemplary embodiment of the present disclosure may be human eye images or animal eye images, and the eye image sequence may contain only eyes, facial images including eyes, full-body images including eyes, or the like.

Exemplarily, the eye image of the target frame can be grayscaled and then subjected to light spot detection, and the light spot detection method can be any method such as pixel brightness retrieval, whole image gradient, image heat map, etc., which is not limited in the present disclosure.

Step 102: acquiring a local detection area from the eye image of the to-be-detected frame based on the light spot. At this time, when a plurality of light spots are detected in the eye image of the target frame, a plurality of local detection areas can be obtained, so that a corresponding local detection area can be acquired for each light spot in the eye image of the to-be-detected frame. It can be seen that the light spots of the eye image of the target frame correspond to the local detection areas of the eye image of the to-be-detected frame on a one-to-one basis, that is, the number of light spots of the eye image of the target frame is the same as the number of local detection areas of the eye image of the to-be-detected frame.

In some exemplary embodiments of the present disclosure, a geometric center of a local detection area may coincide with a light spot center corresponding to the eye image of the target frame, wherein the light spot center may be a geometric center of a light spot, or may be a position with the highest brightness in the light spot.

When the geometric center of the local detection area coincides with the geometric center of the light spot, the geometric center of the local detection area can be determined on the eye image of the to-be-detected frame according to the geometric center coordinates of the light spot, so that the geometric center coordinates of the local detection area coincide with the geometric center coordinates of the light spot, and then the size of the local detection area is determined based on the size of the light spot, so that the size of the local detection area is larger than the size of the light spot. In other words, when performing light spot detection, after the light spot is detected in the eye image of the target frame, the area covered by the light spot can be expanded based on the inter-frame moving characteristics of the light spot, with the geometric center of the light spot as the center, thus obtaining the size of the local detection area. It should be noted that, in the embodiment of the present disclosure, the size of the local detection area is larger than the size of the light spot, which can be: an area defined by an edge of the light spot is located within an area defined by an edge of the corresponding local detection area, and the region area defined by the edge of the light spot is less than the region area defined by the edge of the corresponding local detection area. In some examples, the light spot and the local detection area may both be circular, and in this case a radial size of the local detection area may be 1 to 3 pixels larger than a radial size of the light spot.

When the geometric center of the local detection area coincides with the position with the highest brightness in the light spot, exemplarily, the position with the highest brightness in the light spot included in the eye image of the target frame (defined as a brightness center) can be determined, and then the geometric center of the corresponding local detection area in the eye image of the to-be-detected frame can be determined based on the coordinates of the brightness center, so that the coordinates of the geometric center of the local detection area coincide with the coordinates of the brightness center, and then based on the inter-frame moving characteristics of the light spot, the size of the local detection area is set so as to determine the area occupied by the local detection area in the eye image of the to-be-detected frame.

Step 103: determining a light spot recognition result of the eye image of the to-be-detected frame in response to a pixel brightness judgment result of a first target position located in the local detection area, wherein the first target position is a position with the highest brightness in the local detection area.

In practical applications, the exemplary embodiments of the present disclosure can judge whether the pixel brightness of the first target position located in the local detection area satisfies a light spot center constraint condition, thereby obtaining a pixel brightness judgment result. If the pixel brightness of the first target position located in the local detection area satisfies the light spot center constraint condition, it can be determined that the light spot recognition result includes: that the local detection area and a to-be-detected light spot have an intersection, wherein the to-be-detected light spot is a light spot of the eye image of the target frame that is tracked in the eye image of the to-be-detected frame. If the pixel brightness of the first target position located in the local detection area does not satisfy the light spot center constraint condition, it means that the local detection area does not contain a real light spot. Therefore, it can be determined that the light spot recognition result includes: that the light spot of the eye image of the target frame disappears in the eye image of the to-be-detected frame. It should be noted that the first target position may correspond to one pixel in the local detection area, or may correspond to a plurality of pixels in the local detection area, which is related to the method actually adopted for determining the first target position. For example, in some embodiments of the present disclosure, the grayscale centroid of the local detection area may be taken as the first target position, and in this case, the first target position corresponds to a pixel in the local detection area located at the grayscale centroid coordinate position.

When the number of light spots of the eye image of the target frame is multiple, since here a local detection area corresponds to a light spot of the eye image of the target frame, a plurality of corresponding local detection areas can be obtained from the eye image of the to-be-detected frame based on a plurality of light spots of the eye image of the target frame, wherein the local detection area represents a possible position of the corresponding light spot of the eye image of the target frame in the eye image of the to-be-detected frame.

When the number of light spots of the eye image of the target frame is multiple, the method of the exemplary embodiment of the present disclosure further comprises: storing a plurality of light spot center coordinates of the eye image of the target frame in a light spot sequence array; if the first target position located in the local detection area satisfies the light spot center constraint condition, updating the light spot center coordinates corresponding to the local detection area in the light spot sequence array using the coordinates of the first target position; if the first target position located in the local detection area does not satisfy the light spot center constraint condition, occupying a position in the light spot sequence array corresponding to the local detection area using an empty array, thereby updating the light spot sequence array.

When the light spot sequence array of the eye image of the target frame is updated in the above manner, it can be ensured that the light spot order of the light spot sequence array of the eye image of the to-be-detected frame is the same as the light spot order of the light spot sequence array of the eye image of the target frame. That is to say, after the light spot center coordinates of each position in the light spot sequence array of the eye image of the target frame are determined, if a local detection area acquired from the eye image of the to-be-detected frame based on the light spot center coordinates contains a real light spot, then the light spot center coordinates in the light spot sequence array can be replaced with the coordinates of a first target position of the local detection area; if the local detection area acquired from the eye image of the to-be-detected frame based on the light spot center coordinates does not contain a real light spot, then the light spot center coordinates in the light spot sequence array of the eye image of the target frame can be replaced with an empty array.

It can be seen that when the light spot order of the light spot sequence array of the eye image of the to-be-detected frame is the same as the light spot order of the light spot sequence array of the eye image of the target frame, the light spot sequence array of the eye image of the to-be-detected frame reflects in essence a light spot tracking result of the eye image of the target frame. Thus, it can be determined whether the corresponding light spot is tracked in the eye image of the to-be-detected frame based on whether each position in the light spot sequence array corresponding to the eye image of the to-be-detected frame is an empty array, thereby attaining the purpose of tracking the specified light spot. For example, if an array of a certain position in the light spot sequence array of the eye image of the to-be-detected frame is an empty array, it means that the light spot corresponding to the same position in the light spot sequence array of the eye image of the target frame is not tracked in the eye image of the to-be-detected frame.

In an alternative, the eye image sequence described above is acquired by an image acquisition device. In an exemplary embodiment of the present disclosure, acquiring a local detection area from the eye image of the to-be-detected frame based on the light spot may comprise: determining a size parameter of the local detection area based on an acquisition frame rate of the image acquisition device, and determining the local detection area based on the light spot center and the size parameter of the local detection area. It should be understood that a unit pixel size is determined by a photosensitivity parameter of the image acquisition device.

When the size parameter of the local detection area is determined based on an acquisition frame rate of the image acquisition device, the inter-frame light spot moving distance can be determined in a statistical manner, and then the size parameter of the local detection area is determined based on the inter-frame light spot moving distance and the unit pixel size of an eye image in the eye image sequence. It should be understood that the eye image of the target frame and the eye image of the to-be-detected frame may be defined as inter-frame, and the inter-frame light spot moving distance may refer to a moving distance of a light spot from the eye image of the target frame to the eye image of the to-be-detected frame.

Exemplarily, when the acquisition frame rate is greater, the time length of an acquisition interval between eye images of adjacent frames is shorter, so that the inter-frame light spot moving distance is smaller. On the contrary, when the acquisition frame rate is smaller, the time length of the acquisition interval between eye images of adjacent frames is longer, so that the inter-frame light spot moving distance is greater. It can be seen that the size of the local detection area is positively correlated with the inter-frame light spot moving distance of the eye image sequence.

Exemplarily, in an exemplary embodiment of the present disclosure, the inter-frame light spot moving distance can be determined based on the size parameter of the local detection area and the acquisition frame rate of the image acquisition device, and the size parameter of the local detection area or the coverage range of the eye image of the to-be-detected frame can also be determined with reference to both a geometric shape of the local detection area and the acquisition frame rate of the image acquisition device. Taking an example, when the local detection area is approximately circular, the size parameter may include a radial size, such as a radius or a diameter. When the local detection area is rectangular, the size parameter includes a diagonal parameter, such as a diagonal length or diagonal vertex coordinates.

Exemplarily, when an eye image sequence is acquired using an image acquisition device, one frame of eye image can be acquired every millisecond, so that a moving distance of the light spot center from the eye image of the target frame to the eye image of the to-be-detected frame is relatively short. The light spot center of the eye image of the target frame can be set as a geometric center of the local detection area. On this basis, based on the geometric shape of the local detection area and the acquisition frame rate of the image acquisition device (or the inter-frame light spot moving distance), the position and coverage area of the local detection area can be accurately located. In this case, the local detection area belongs to a local area of the eye image of the to-be-detected frame, so that when performing light spot detection on the eye image of the to-be-detected frame, it is not necessary to detect all pixels of the eye image of the to-be-detected frame, thereby reducing the amount of computing of light spot detection and device power consumption.

Exemplarily, when taking a pixel as unit, the number of pixels from the geometric center of the local detection area to the edge of the local detection area can be determined using a ratio of the inter-frame light spot moving distance to the unit pixel size. If the ratio of the inter-frame light spot moving distance to the unit pixel size is a decimal, the ratio of the inter-frame light spot moving distance to the unit pixel size can be rounded up, so that the range of the local detection area is slightly larger than the corresponding light spot range in the eye image of the target frame, thereby avoiding errors in subsequent confirmation of whether the local detection area contains a real light spot.

When the eye image of the target frame and the eye image of the to-be-detected frame are eye images of adjacent frames, the size parameter of the local detection area is greater than or equal to N, $N = \left\lceil d_0 \middle/ d_{pix} \right\rceil$, where N represents the minimum number of pixels from the geometric center of the local detection area to the edge of the local

detection area, $d_0$ represents the inter-frame light spot moving distance, $d_{pix}$ represents the unit pixel size of the eye image sequence, and $\lceil \bullet \rceil$ represents the round-up symbol. It can be seen that the size of the local detection area is negatively correlated with the unit pixel size of an eye image of each frame contained in the eye image sequence, and the size of the local detection area is positively correlated with the inter-frame light spot moving distance.

In an alternative, the light spot center constraint condition in the exemplary embodiment of the present disclosure includes: that a difference between the brightness of the first target position and a target brightness is greater than or equal to a brightness threshold, wherein the target brightness is determined by the brightness of at least one second target position, the second target position being located at an edge of the local detection area. That is, when the first target position is the position with the highest brightness in the local detection area, it can be determined, with the brightness threshold as basis, whether the brightness of the local detection area is significantly higher than the brightness of the surrounding area of the local detection area. It should be understood that the brightness threshold can be set according to actual conditions.

Exemplarily, if the difference between the pixel brightness of the first target position and the target brightness is greater than or equal to the brightness threshold, it means that the brightness of the local detection area is particularly high and is significantly higher than the brightness of the surrounding area of the local detection area. Therefore, the light spot of the eye image of the target frame corresponding to the local detection area is tracked in the eye image of the to-be-detected frame; if the difference between the pixel brightness of the first target position and the target brightness is less than the brightness threshold, it means that the brightness of the local detection area is relatively low and is significantly lower than the brightness of the surrounding area of the local detection area; it is not a real light spot, and the light spot of the eye image of the target frame corresponding to the local detection area disappears in the eye image of the to-be-detected frame.

Exemplarily, the distance between the second target position and the first target position may satisfy: $d \leq d' \leq d_{max}$, where $d$ represents a distance between the first target position and a contour position of the local detection area, $d'$ represents the distance between the first target position and the second target position, and $d_{max}$ represents the maximum distance between the first target position and the second target position. It can be seen that the second target position is in essence a certain position on a contour line of the local detection area or a certain position in a non-local detection area that is relatively close to the contour line of the local detection area. It should be understood that if the maximum distance between the first target position and the second target position is greater than $d$, $d_{max}-d=\Delta d$ can be set, where $\Delta d$ can be designed according to actual conditions.

When there may be a plurality of second target positions, the target brightness may be determined based on the pixel brightness of the plurality of second target positions. For example, the target brightness may be a pixel brightness average value of the plurality of second target positions. For example, the pixel brightness average value of the plurality of second target positions can be set as the target brightness, and then it is judged whether the brightness of the first target position is greater than the target brightness, so as to determine whether the pixel brightness of the first target position satisfies the light spot center constraint condition, thereby avoiding detection errors caused by excessive brightness of local pixels in the non-local detection area.

In practical applications, a pixel at the second target position in the eye image of the to-be-detected frame may be located in various directions of the pixel at the first target position, such as above, below, to the left and to the right, and of course, may also be located in other directions. The local detection area may have a circular, elliptical, rectangular, or irregular shape, or the like. The following description will be made using a circular shape as an example.

When the number of the second target positions is one, FIG. 2A shows a schematic diagram of a light spot recognition and judgment principle according to an exemplary embodiment of the present disclosure. As shown in FIG. 2A, a local detection area 200 is a rectangular local detection area, the pixel at the first target position is denoted by O, and the pixel at the second target position is denoted by $P_1$.

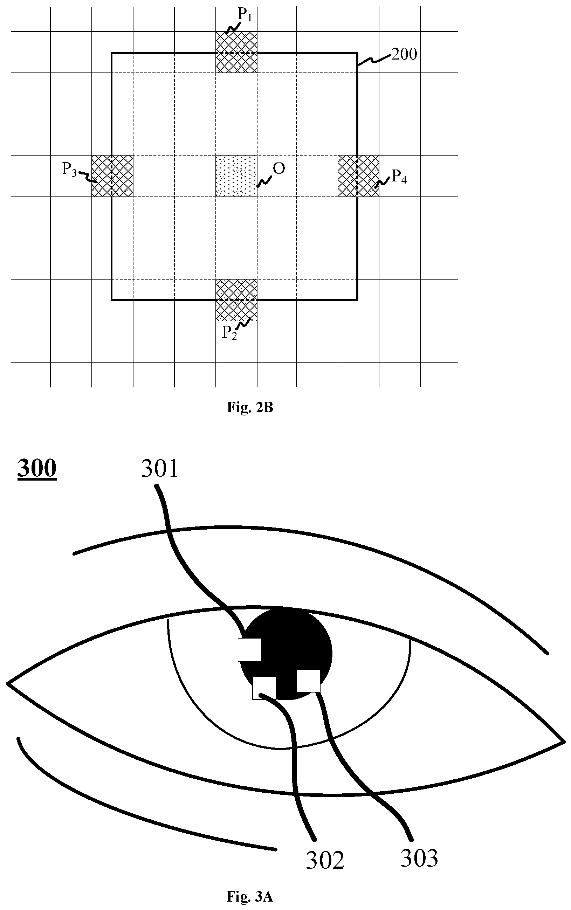

As shown in FIG. 2A, assuming that the pixel O at the first target position coincides with a pixel where a geometric center of the local detection area is located, the pixel $P_1$ at the second target position is located at the pixel where an edge line of a local detection area 300 passes (refer to FIG. 3A), or may be located in a non-local detection area (not shown) outside the local detection area 300, and may be adjacent to (not shown) or not adjacent to (not shown) the pixel where the contour line of the local detection area 300 is located.

As shown in FIG. 2A, when the number of pixels at the second target position is one, the target brightness is the brightness of the pixel O corresponding to the first target position, and it can be calculated whether a difference between the brightness of the pixel O and the brightness of the pixel $P_1$ is greater than or equal to the brightness threshold. If it is greater than or equal to the brightness threshold, it can be judged that the pixel brightness of the first target position satisfies the light spot center constraint condition, otherwise it does not satisfy the light spot center constraint condition.

When the number of the second target positions is multiple, FIG. 2B shows a schematic diagram of another light spot recognition principle of an exemplary embodiment of the present disclosure. As shown in FIG. 2B, the local detection area 200 is a rectangular local detection area, the pixel at the first target position is denoted by O, and the number of the pixels at the second target positions is four, which are the upper pixel $P_1$ located above the pixel O at the first target position,

the lower pixel $P_2$ located below the pixel O at the first target position, the left pixel $P_3$ located to the left of the pixel O at the first target position, and the right pixel $P_4$ located to the right of the pixel O at the first target position, respectively. It should be understood that the upper pixel $P_1$, the lower pixel $P_2$, the left pixel $P_3$ and the right pixel $P_4$ can be located at the pixels where the edge lines of the local detection area 200 passes, or can be located in the non-local detection area (not shown) outside the local detection area 300, and can be adjacent to (not shown) or not adjacent to (not shown) the pixels where the contour lines of the local detection area 300 is located.

As shown in FIG. 2B, when the number of pixels at the second target positions is four, an average value of the pixel brightness of the upper pixel $P_1$, the pixel brightness of the lower pixel $P_2$, the pixel brightness of the left pixel $P_3$, and the pixel brightness of the right pixel $P_4$ can be calculated, which is regarded as the target brightness; it is calculated whether the difference between the brightness of the pixel O and the target brightness is greater than or equal to a brightness threshold, and if it is greater than or equal to the brightness threshold, it can be judged that the pixel brightness of the first target position satisfies the light spot center constraint condition, otherwise it does not satisfy the light spot center constraint condition.

When performing light spot recognition using the principle shown in FIG. 2B, if the brightness of one of the upper pixel $P_1$, the lower pixel $P_2$, the left pixel $P_3$, and the right pixel $P_4$ is abnormally high, the brightness of the other three pixels can be averaged so that by integrating the brightness of the pixels in multiple directions, it is accurately judged whether the local detection area 200 is a real light spot.

In an alternative, an exemplary embodiment of the present disclosure can detect a local detection area based on one or more light spot detection algorithms to obtain the pixel brightness of the first target position. The light spot detection algorithm can be any method such as pixel brightness retrieval, whole image gradient, image heat map, etc. In addition, the grayscale centroid method, Hough circle detection method, circle fitting method and other methods are also used for light spot detection, but not limited to these. In light spot detection, the measured brightness is often expressed in the form of grayscale values, and may also be expressed otherwise, but in any case, it should be able to reflect the brightness.

In some embodiments, the pixel brightness of the first target position for the local detection area can be obtained using a light spot detection algorithm. At this time, a difference between the pixel brightness of the first target position and the target brightness can be calculated, and then the difference calculation result can be compared with a brightness threshold, thereby performing light spot recognition.

In another alternative, the pixel brightness of the first target position in the exemplary embodiment of the present disclosure may be a weighted value of the pixel brightness of a plurality of first target positions. For example, the local detection area can be detected using a plurality of light spot detection algorithms to obtain the pixel brightness of the plurality of first target positions, and then the pixel brightness of the plurality of first target positions can be weighted to obtain a brightness weighted value of the first target positions. At this time, a difference between the brightness weighted value of the first target positions and the target brightness can be calculated, and then the difference calculation result can be compared with the brightness threshold, thereby performing light spot recognition.

In addition, a weight prediction model can be trained based on historical data to predict the corresponding weights of various light spot detection algorithms, and the corresponding weights of various light spot detection algorithms can also be set according to actual experience, thereby reducing the error of the final calculated value and more accurately judging whether the tracked light spot is a real light spot, wherein there may be one or more weight prediction models, and one weight prediction model may predict corresponding weights of one or more light spot detection algorithms.

In order to facilitate understanding of the method of the exemplary embodiment of the present disclosure, the implementation process of the embodiment of the present disclosure is described below by way of example. It should be understood that the following process is for explanation only and is not intended to be limiting.

An eye image sequence that requires light spot detection is acquired using a camera with a resolution of 400*400 and a frame rate of 30 frames/s. Light spot detection is performed on an eye image of a first frame of the eye image sequence (that is, a target eye image) to obtain the coordinates of the center of each light spot. The coordinates of the center of each light spot can be considered to be the starting coordinates of each light spot in the eye image sequence, and the coordinates of the center of each light spot are saved as a light spot sequence array.

FIG. 3A shows schematic diagram 1 of a light spot tracking process of an eye video sequence of an exemplary embodiment of the present disclosure. As shown in FIG. 3A, there exist a first light spot 301, a second light spot 302, and a third light spot 303 on an eyeball surface of an eye image of a first frame of an eye video sequence 300; after light spot detection, it is determined that the light spot center coordinates of the first light spot 301 are $(x_{11}, y_{11})$, the light spot center coordinates of the second light spot 302 are $(x_{12}, y_{12})$, and the light spot center coordinates of the third light spot 303 are $(x_{13}, y_{13})$; the light spot center coordinates of the first light spot 301, the light spot center coordinates of the second light spot 302, and the light spot center coordinates of the third light spot 303 are saved in the light spot sequence array Array=$[(x_{11}, y_{11}), (x_{12}, y_{12}), (x_{13}, y_{13})]$, where $x_{11}$ is the horizontal coordinate of the first light spot of the eye image of the first frame, $x_{12}$ is the horizontal coordinate of the second light spot of the eye image of the first frame, $x_{13}$ is the horizontal coordinate of the third light spot of the eye image of the first frame, $y_{11}$ is the vertical coordinate of the first light spot of the eye image of the first frame, $y_{12}$ is the vertical coordinate of the second light spot of the eye image of the first frame, and $y_{13}$ is the vertical

coordinate of the third light spot of the eye image of the first frame.

In practical application, the light spot center may be tracked in an eye image of a second frame in the order in which the light spot center coordinates are detected in the eye image of the first frame. For example: Statistics show that the light spot area formed on the eyeball surface is generally within 20 pixels, and when the frame rate of the camera is 30 frames/s, the inter-frame light spot moving distance is within 3 pixels. Therefore, a rectangular local detection area with a range of 6×6 pixels can be selected with the center coordinates of the three light spots detected in the eye image of the first frame as the geometric center of the corresponding local detection area, and then the pixel coordinates of the first target position corresponding to each local detection area in the eye image of the second frame can be determined using the light spot detection algorithm. It should be understood that for the light spot tracking of an eye image of each frame after the eye image of the second frame, reference can be made to the light spot detection process of the eye image of the second frame. The following description is made by taking the eye image of the second frame as an example.

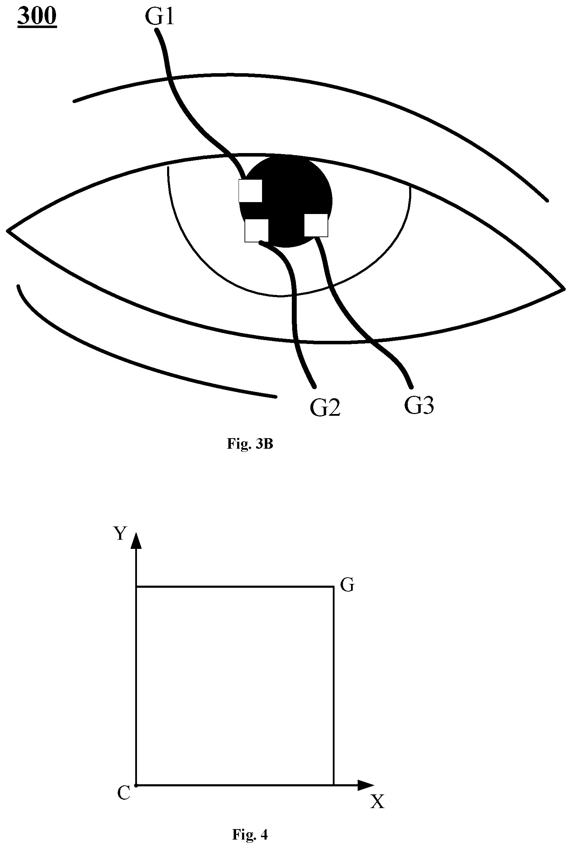

FIG. 3B shows schematic diagram 2 of the light spot tracking process of an eye video sequence of an exemplary embodiment of the present disclosure. As shown in FIG. 3B, based on the light spot center coordinates of the first light spot 301, the corresponding first local detection area G1 is searched for in the eye image of the second frame, so that the geometric center coordinates of the first local detection area G1 are $(x_{11}, y_{11})$; based on the light spot center coordinates of the second light spot 302, the corresponding second local detection area G2 is searched for in the eye image of the second frame, so that the geometric center coordinates of the second local detection area G2 are $(x_{12}, y_{12})$; and based on the light spot center coordinates of the third light spot 303, the corresponding third local detection area G3 is searched for in the eye image of the second frame, so that the geometric center coordinates of the third local detection area G3 are $(x_{13}, y_{13})$.

For the eye image of the second frame of the eye image sequence 300, the first local detection area $G_1$ is detected using the light spot detection algorithm, and the pixel coordinates $(x_{21}, y_{21})$ of the first target position located in the first local detection area $G_1$ are obtained; the second local detection area $G_2$ is detected using the light spot detection algorithm, and the pixel coordinates $(x_{22}, y_{22})$ of the second target position located in the second local detection area $G_2$ are obtained; the third local detection area $G_3$ is detected using the light spot detection algorithm, and the pixel coordinates $(x_{23}, y_{23})$ of the first target position located in the third local detection area $G_3$ are obtained.

In the exemplary embodiment of the present disclosure, the grayscale centroid coordinates of a local detection area can be detected using a grayscale centroid method, and the grayscale centroid of the local detection area can be defined as the first target position. In this process, the grayscale centroid coordinates can be calculated according to a light intensity distribution of the local detection area, thereby improving the accuracy in judging the position with the highest brightness in the local detection area, so as to further ensure the recognition accuracy of subsequent light spot recognition.

Exemplarily, the grayscale centroid coordinate detection process of the local detection area in the exemplary embodiment of the present disclosure comprises:

a first step of calculating the sum $G_{all}$ of the grayscale values of all pixels in the local detection area. FIG. 4 shows a schematic diagram of a coordinate system of a local detection area of an exemplary embodiment of the present disclosure, wherein the coordinate system of the local detection area is established with the pixel C at the lower left corner of the local detection area as the origin, the coordinates of the origin being (0, 0). The coordinates of the pixel G at the upper right corner of the local detection area are (m, n), so the local detection area includes n rows and m columns of pixels. Based on this, the sum $G_{all}$ of the grayscale values of all pixels in the local detection area is

$G_{all} = \sum_{i=0}^{m}\sum_{j=0}^{n} I(i,j)$, where $I(i,j)$ is the brightness of the pixel in the i-th row and j-th column in the local detection area.

a second step of calculating the sum $G_x$ of the product of the brightness of each pixel in the local detection area and the square of the X coordinate of the corresponding pixel in the coordinate system of the local detection area, and the sum $G_y$ of the product of the brightness of each pixel in the local detection area and the square of the Y coordinate of the corresponding pixel in the coordinate system of the local detection area, $G_x = \sum_{i=0}^{m}\sum_{j=0}^{n} I(i,j)*j^2$, $G_y = \sum_{i=0}^{m}\sum_{j=0}^{n} I(i,j)*i^2$.

a third step of calculating the grayscale centroid coordinates $(x^2, y^2)$ of the local detection area.

$$(x, y) = \left(\sqrt{\frac{G_x}{G_{all}}}, \sqrt{\frac{G_y}{G_{all}}}\right).$$

In order to ensure that the obtained local detection area is the tracked light spot, it can be judged whether the centroid coordinates of the local detection area are real light spots. For example, the pixel coordinates of the first target position can be determined based on the grayscale centroid coordinates $(x, y)$ of the local detection area, and then the grayscale value of the first target position, which is the centroid grayscale value of the local detection area, can be determined using the pixel coordinates of the first target position; meanwhile, a grayscale average value of four second target positions is calculated to obtain a target brightness. On this basis, a difference between the grayscale value of the first target position and the target brightness is calculated, and the difference calculation result is compared with a brightness threshold, thereby determining whether the light spot center constraint condition is satisfied. When the local detection area is the aforementioned rectangular area with the range of $6 \times 6$ pixels, the pixel coordinates of the four second target positions are $(x-3,y),(x+3,y),(x,y-3)$ and $(x, y+3)$, respectively.

If the difference calculation result is greater than or equal to the brightness threshold, it can be considered that a theoretical area of the light spot of the eye image of the first frame on the eye image of the second frame (which can be called a theoretical light spot) has an intersection, i.e., at least partially overlaps, with the local detection area. For example, the local detection area contains the theoretical light spot, or the local detection area partially overlaps with the theoretical light spot. In addition, the local detection area detected in the eye image of the to-be-detected frame corresponds one-to-one to the light spot detected in the eye image of the target frame. Therefore, when the local detection area has an intersection with the theoretical light spot, the theoretical light spot that partially overlaps the local detection area corresponds to the light spot in the eye image of the target frame, and the pixel coordinates of the corresponding light spot in the light spot sequence array can be updated using the pixel coordinates of the first target position located in the local detection area. For example, corresponding to the k-th light spot in the eye image of the target frame, the pixel coordinates corresponding to the k-th light spot in the light spot sequence array can be updated to the pixel coordinates of the first target position located in the local detection area. If the difference calculation result is less than the brightness threshold, it can be considered that the local detection area has no intersection with the theoretical light spot, and the local detection area does not contain the real light spot, and then the position corresponding to the local detection area in the light spot sequence array is occupied using an empty array, so that the light spot that already disappears is excluded from the light spot detection of eye images of subsequent frames. It should be understood that the theoretical light spot mentioned above can be considered to be an area where the light spot of the eye image of the first frame is tracked on the eye image of the second frame based on the inter-frame light spot moving characteristics.

Taking FIG. 3A and FIG. 3B as examples, in FIG. 3A, the light spot sequence array of the eye image of the first frame is Array=$[(x_{11},y_{11}), (x_{12},y_{12}), (x_{13},y_{13})]$. Assuming that the first local detection area has an intersection with the theoretical light spot corresponding to the first light spot, $(x_{11}, y_{11})$ in the light spot sequence array Array can be updated to $(x_{21},y_{21})$ at this time; assuming that the second local detection area has no intersection with the theoretical light spot corresponding to the second light spot, $(x_{12},y_{12})$ in the light spot sequence array Array can be occupied using an empty array at this time; assuming that the third local detection area has an intersection with the theoretical light spot corresponding to the third light spot, $(x_{11}, y_{11})$ in the light spot sequence array Array can be updated to $(x_{23},y_{23})$ at this time. It can be seen that in the exemplary embodiment of the present disclosure, after completing the light spot detection of the eye image of the second frame, Array=$[(x_{11}, y_{11}), (x_{12},y_{12}), (x_{13},y_{13})]$ can be updated to Array=$[(x_{21},y_{21}), (0,0), (x_{23}, y_{23})]$, thereby obtaining tracking results of the first light spot, the second light spot and the third light spot in the eye image of the second frame. Since the latest light spot sequence array inherits the position of the light spot of the eye image of the first frame in the light spot sequence array, in the exemplary embodiment of the present disclosure, whether the light spot in the eye image of the first frame disappears in the eye image of the second frame, the serial number of the light spot that disappears in the eye image of the second frame, and the pixel coordinates of the tracked light spot can be determined through the latest light spot sequence array. Based on this, in the exemplary embodiment of the present disclosure, when tracking a specified light spot, the latest light spot sequence array can be queried based on the position of the specified light spot in the light spot sequence array, so as to determine whether it is tracked in the latest eye image. If a motion trajectory of the light spot is obtained from the eye video sequence, the motion trajectory of the light spot in the eye video sequence can also be obtained by recording historical information of the light spot sequence array based on the historical information of the light spot sequence array.

In one or more technical solutions provided in an embodiment of the present disclosure, taking into account the situation that the inter-frame light spot moving distance is short, after it has been detected that the eye image of the target frame contains a light spot, a local detection area is obtained from the eye image of the to-be-detected frame based on the light spot, thereby narrowing the light spot detection range of the eye image of the to-be-detected frame. On this basis, the position with the highest brightness in the local detection area can be set as the first target position, and then the light spot recognition result of the eye image of the to-be-detected frame can be determined based on the pixel brightness judgment result of the first target position, so as to determine whether the light spot is tracked in the eye image of the to-be-detected frame, so as to improve the accuracy of light spot detection. As is clear, the method of the exemplary embodiment of the present disclosure, when tracking the light spot, performs local light spot detection on the eye image of the to-be-detected frame with reference to the inter-frame moving characteristics of the light spot while ensuring the accuracy of light spot detection, thereby avoiding performing light spot detection on the image with the global search method.

After testing, it is found that the method of the exemplary embodiment of the present invention can reduce the amount of computing to $10^3$ times compared with the global search method. It can be seen that the method of the exemplary embodiment of the present disclosure can reduce the amount of computing and device power consumption while ensuring the accuracy of light spot detection, thereby improving the endurance of mobile devices.

The above mainly introduces the solution provided by the embodiment of the present disclosure from the perspective of an electronic device. It can be understood that, in order to realize the above functions, the electronic device includes the corresponding hardware structure and/or software modules corresponding to executing the respective functions. Those skilled in the art should readily appreciate that, with reference to the units and algorithm steps of the various examples described in the embodiments disclosed herein, the present disclosure can be implemented in the form of hardware or a combination of hardware and computer software. Whether a function is performed by hardware or by computer software driving hardware depends on the specific application and design constraint condition of the technical solution. Professional technicians may use different methods to implement the described functions for each specific application, but such implementation should not be considered to be beyond the scope of the present disclosure.

The embodiments of the present disclosure may divide the electronic device into functional units according to the above method examples. For example, the division of functional modules can be performed corresponding to respective functions, or two or more functions can be integrated into one processing module. The above integrated modules can be implemented in the form of hardware or in the form of software functional modules. It should be noted that the division of modules in the embodiments of the present disclosure is schematic and is merely a logical function division, and there may be other division methods in actual implementation.

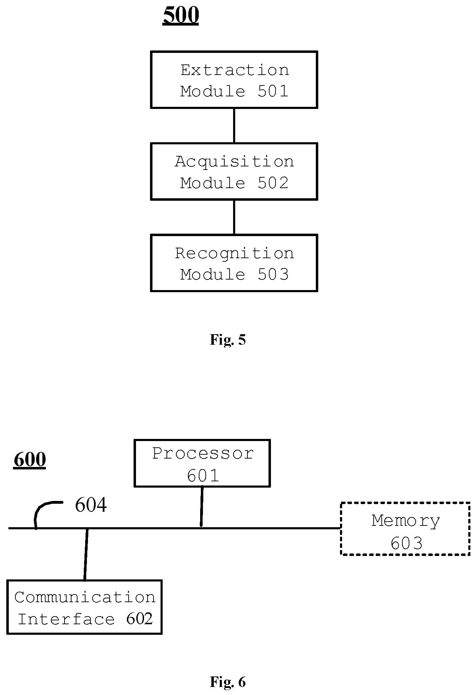

In the case of division of functional modules corresponding to respective functions, an exemplary embodiment of the present disclosure provides a light spot tracking apparatus, which may be an electronic device or a chip applied to the electronic device. FIG. 5 shows a functional schematic block diagram of a light spot tracking apparatus according to an exemplary embodiment of the present disclosure. As shown in FIG. 5, a light spot tracking apparatus 500 comprises:

an extraction module 501 configured to extract an eye image of a target frame and an eye image of a to-be-detected frame from an eye image sequence, wherein the eye image of the target frame contains a light spot, and the acquisition time of the eye image of the target frame is earlier than the acquisition time of the eye image of the to-be-detected frame;

an acquisition module 502 configured to acquire a local detection area from the eye image of the to-be-detected frame based on the light spot;

a recognition module 503 configured to determine a light spot recognition result of the eye image of the to-be-detected frame in response to a pixel brightness judgment result of a first target position located in the local detection area, wherein the first target position is a position with the highest brightness in the local detection area.

In one possible implementation, a geometric center of the local detection area coincides with a light spot center.

In one possible implementation, the light spot center is a position with the highest brightness in the light spot; or, the light spot center is a geometric center of the light spot, and the size of the local detection area is larger than the size of the light spot.

In one possible implementation, as shown in FIG. 5, the acquisition module 502 is configured to determine a size parameter of the local detection area based on an acquisition frame rate of the image acquisition device, and determine the local detection area based on the light spot center of the eye image of the target frame and the size parameter of the local detection area.

In one possible implementation, the size of the local detection area is positively correlated with the inter-frame light spot moving distance.

In one possible implementation, as shown in FIG. 5, the recognition module 503 is further configured to detect the local detection area using a grayscale centroid algorithm, and obtain the pixel brightness of the first target position.

In one possible implementation, as shown in FIG. 5, the pixel brightness of the first target position is a brightness weighted value of a plurality of the first target positions, and the recognition module 503 is further configured to detect the local detection area using a plurality of light spot detection algorithms, obtain the brightness of the plurality of the first target positions, weight the brightness of the plurality of the first target positions, and obtain the brightness weighted value of the first target positions.

In one possible implementation, as shown in FIG. 5, the recognition module 503 is configured to, if a pixel brightness of the first target position located in the local detection area satisfies a light spot center constraint condition, determine that the light spot recognition result includes: that the local detection area and a to-be-detected light spot have an intersection, wherein the to-be-detected light spot is a light spot of the eye image of the target frame that is tracked in the eye image of the to-be-detected frame; if the pixel brightness of the first target position located in the local detection area does not satisfy the light spot center constraint condition, determine that the light spot recognition result includes: that the light spot of the eye image of the target frame disappears in the eye image of the to-be-detected frame.

In one possible implementation, as shown in FIG. 5, the number of light spots of the eye image of the target frame is multiple, and the recognition module 503 is further configured to store a plurality of light spot center coordinates of the eye image of the target frame in a light spot sequence array; if the first target position located in the local detection area satisfies the light spot center constraint condition, update the light spot center coordinates corresponding to the local detection area in the light spot sequence array using the coordinates of the first target position; and if the first target position located in the local detection area does not satisfy the light spot center constraint condition, occupy a position in the light spot sequence array corresponding to the local detection area using an empty array.

In one possible implementation, the light spot center constraint condition includes: that a difference between the pixel brightness of the first target position and a target brightness is greater than or equal to a brightness threshold; wherein the target brightness is a brightness determined by a pixel brightness of at least one second target position, the second target position being located at an edge of the local detection area.

In one possible implementation, a distance between the second target position and the first target position satisfies:

$d \leq d' \leq d_{max}$, where $d$ represents a distance between the first target position and a contour position of the local detection area, $d'$ represents a distance between the first target position and the second target position, and $d_{max}$ represents a maximum distance between the first target position and the second target position.

FIG. 6 shows a schematic block diagram of a chip according to an exemplary embodiment of the present disclosure. As shown in FIG. 6, a chip 600 comprises one or more (including two) processors 601 and a communication interface 602. The communication interface 602 can support the electronic device to execute the data transmitting and receiving steps in the above method, and the processor 601 can support the electronic device to execute the data processing step in the above method.

Optionally, as shown in FIG. 6, the chip 600 further comprises a memory 603, which may include a read-only memory and a random access memory, and provides operation instructions and data to the processor. A portion of the memory may also include non-volatile random access memory (NVRAM).

In some embodiments, as shown in FIG. 6 , the processor 601 performs corresponding operations by calling operation instructions stored in the memory (the operation instructions may be stored in an operating system). The processor 601 controls processing operations of any of the terminal devices, and the processor may also be referred to as a central processing unit (CPU). The memory 603 may include a read-only memory and a random access memory, and provides instructions and data to the processor 601. A portion of the memory 603 may further include NVRAM. For example, in application, a memory, a communication interface and a memory are coupled together through a bus system, wherein the bus system includes not only a data bus but also a power bus, a control bus and a status signal bus, etc. However, for the sake of clarity, various buses are labeled as bus system 604 in FIG. 6.

The method disclosed in the above-mentioned embodiment of the present disclosure may be applied to a processor, or implemented by the processor. The processor may be an integrated circuit chip that has signal processing capabilities. In the implementation process, each step of the above method can be completed by an integrated logic circuit of hardware in the processor or instructions in the form of software. The above-mentioned processor can be a general-purpose processor, a digital signal processor (DSP), an ASIC, a field-programmable gate array (FPGA) or other programmable logic devices, discrete gate or transistor logic devices, discrete hardware components. The various methods, steps and logic diagrams disclosed in the embodiments of the present disclosure may be implemented or executed. The general-purpose processor may be a microprocessor, or the processor may be any conventional processor or the like. The steps of the method disclosed in the embodiment of the present disclosure may be directly embodied as being executed by a hardware decoding processor, or executed by a combination of hardware and software modules in the decoding processor. The software modules may be located in a random access memory, a flash memory, a read-only memory, a programmable read-only memory, or an electrically erasable programmable memory, a register, or other mature storage media in the art. The storage medium is located in the memory, and the processor reads information in the memory and completes the steps of the above method in combination with its hardware.

An exemplary embodiment of the present disclosure further provides an electronic device, comprising: at least one processor; and a memory communicatively connected to the at least one processor. The memory stores a computer program that can be executed by the at least one processor, and the computer program, when executed by the at least one processor, is used to cause the electronic device to perform the method according to an embodiment of the present disclosure.

An exemplary embodiment of the present disclosure further provides a non-transitory computer-readable storage medium storing a computer program, wherein the computer program, when executed by a processor of a computer, is used to cause the computer to perform the method according to the embodiment of the present disclosure.

An exemplary embodiment of the present disclosure further provides a computer program product, including a computer program, wherein the computer program, when executed by a processor of a computer, is used to cause the computer to perform the method according to the embodiment of the present disclosure.

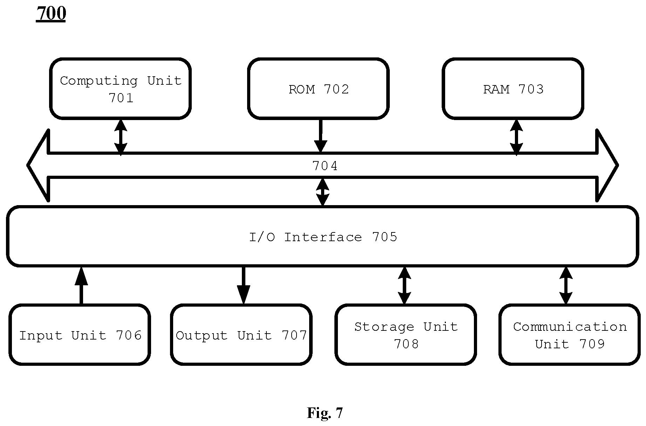

Referring to FIG. 7, a structural block diagram of an electronic device 700 that can serve as a server or client of the present disclosure will now be described, which is an example of a hardware device that can be applied to various aspects of the present disclosure. Electronic devices are intended to refer to various forms of digital electronic computer devices, such as laptops, desktops, workstations, personal digital assistants, servers, blade servers, mainframes, and other appropriate computers. Electronic devices may also refer to various forms of mobile devices, such as personal digital assistants, cellular phones, smart phones, wearable devices, and other similar computing devices. The components shown herein, their connections and relationships, and their functions, are intended only as examples, and are not meant to limit implementations of the disclosure described and/or claimed herein.

As shown in FIG. 7, the electronic device 700 comprises a computing unit 701, which can perform various appropriate actions and processes according to a computer program stored in a read-only memory (ROM) 702 or a computer program loaded from a storage unit 708 to a random access memory (RAM) 703. In the RAM 703, various programs and data necessary for the operations of the device 700 may also be stored. The computing unit 701, the ROM 702, and the RAM 703 are connected to one another via a bus 704. An input/output (I/O) interface 705 is also connected to the bus 704.

As shown in FIG. 7, multiple components in the electronic device 700 are connected to the I/O interface 705, including an input unit 706, an output unit 707, a storage unit 708, and a communication unit 709. The input unit 706 may be any type of device capable of inputting information to the electronic device 700, and the input unit 706 may receive input digital or character information and generate key signal input related to user settings and/or function control of the electronic device. The output unit 707 may be any type of device capable of presenting information, and may include, but is not limited to, a display, a speaker, a video/audio output terminal, a vibrator, and/or a printer. The storage unit 708 may include, but is not limited to, a magnetic disk and an optical disk. The communication unit 709 allows the electronic device 700 to exchange information/data with other devices through a computer network such as the Internet and/or various telecommunication networks, and may include but is not limited to a modem, a network card, an infrared communication device, a wireless communication transceiver and/or a chipset, such as a Bluetooth™ device, a WiFi device, a WiMax device, a cellular communication device and/or the like.

As shown in FIG. 7, the computing unit 701 may be various general-purpose and/or special-purpose processing components having processing and computing capabilities. Some examples of computing unit 701 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 701 executes the various methods and processes described above. For example, in some embodiments, the method of the exemplary embodiment of the present disclosure may be implemented as a computer software program tangibly embodied in a machine-readable medium such as the storage unit 708. In some embodiments, part or all of the computer program may be loaded and/or installed on the electronic device 700 via the ROM 702 and/or the communication unit 709. In some embodiments, the computing unit 701 may be configured to perform the method in any other suitable manner (e.g., by means of firmware).

Program code for implementing the method of the present disclosure may be written in any combination of one or more programming languages. The program codes may be provided to a processor or controller of a general-purpose computer, a special-purpose computer or other programmable data processing device, so that the program code, when executed by the processor or controller, causes the functions/operations specified in the flowcharts and/or block diagrams to be implemented. The program code may be executed entirely on the machine, partly on the machine, partly on the machine and partly on a remote machine as a stand-alone software package or entirely on a remote machine or server.

In the context of the present disclosure, a machine-readable medium may be a tangible medium that can contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium would include electrical connections based on one or more wires, a portable computer disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing.

As used in this disclosure, the terms "machine-readable medium" and "computer-readable medium" refer to any computer program product, apparatus, and/or device (e.g., magnetic disks, optical disks, memories, programmable logic devices (PLDs)) for providing machine instructions and/or data to a programmable processor, including machine-readable media that receive machine instructions as machine-readable signals. The term "machine-readable signal" refers to any signal used to provide machine instructions and/or data to a programmable processor.

To provide interaction with a user, the systems and techniques described herein can be implemented on a computer having: a display device (e.g., a cathode ray tube (CRT) or liquid crystal display (LCD) monitor) configured to display information to the user; and a keyboard and pointing device (e.g., a mouse or trackball) through which the user can provide input to the computer. Other types of devices may also be used to provide interaction with the user; for example, the feedback provided to the user may be any form of sensory feedback (e.g., visual feedback, auditory feedback, or tactile feedback); and input from the user may be received in any form (including acoustic input, voice input, or tactile input).

The systems and techniques described herein may be implemented in a computing system that includes back-end components (e.g., as a data server), or a computing system that includes middleware components (e.g., an application server), or a computing system that includes front-end components (e.g., a user computer with a graphical user interface or a web browser through which a user can interact with implementations of the systems and techniques described herein), or a computing system that includes any combination of such back-end components, middleware components, or front-end components. The components of the system can be interconnected by any form or medium of digital data communication (e.g., a communication network). Examples of the communication network include a local area network (LAN), a wide area network (WAN), and the Internet. A computer system may include a client and a server. The client and the server are generally remote from each other and typically interact through a communication network. The relationship of the client and the server arises by virtue of computer programs running on the respective computers and having a client-server relationship with each other.

In the above embodiments, it may be implemented in whole or in part by software, hardware, firmware or any combination thereof. When implemented using software, it may be implemented in whole or in part in the form of a computer program product. The computer program product comprises one or more computer program or instructions. When the computer program or instructions are loaded and executed on a computer, the processes or functions described in the embodiments of the present disclosure are executed in whole or in part. The computer may be a general-purpose computer, a special-purpose computer, a computer network, a terminal, a display terminal or other programmable device. The computer program or instructions may be stored on a computer-readable storage medium, or transmitted from one computer-readable storage medium to another computer-readable storage medium. For example, the computer program or instructions may be transmitted from one website, computer, server or data center to another website, computer, server or data center in a wired or wireless manner. The computer-readable storage medium may be any available medium that can be accessed by a computer or a data storage device such as a server or a data center that integrates one or more available media. The available medium may be a magnetic medium, such as a floppy disk, a hard disk, or a magnetic tape; it may also be an optical medium, such as a digital video disc (DVD); or it may be a semiconductor medium, such as a solid state drive (SSD).

Although the present disclosure has been described in conjunction with specific features and embodiments thereof, it will be apparent that various modifications and combinations thereof can be made without departing from the spirit and scope of the present disclosure. Accordingly, the specification and drawings are merely illustrative of the present disclosure as defined by the appended claims, and are intended to cover any and all modifications, variations, combinations or equivalents within the scope of the present disclosure. Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is intended to include these modifications and variations.

**Claims**

1. A light spot tracking method, comprising:

   extracting an eye image of a target frame and an eye image of a to-be-detected frame from an eye image sequence, wherein the eye image of the target frame contains a light spot, and the acquisition time of the eye image of the target frame is earlier than the acquisition time of the eye image of the to-be-detected frame; acquiring a local detection area from the eye image of the to-be-detected frame based on the light spot; and determining a light spot recognition result of the eye image of the to-be-detected frame in response to a pixel brightness judgment result of a first target position located in the local detection area, wherein the first target position is a position with the highest brightness in the local detection area.

2. The method according to claim 1, wherein a geometric center of the local detection area coincides with a light spot center.

3. The method according to claim 2, wherein the light spot center is a position with the highest brightness in the light spot; or,
   the light spot center is a geometric center of the light spot, and the size of the local detection area is larger than the size of the light spot.

4. The method according to any one of claims 1-3, wherein the eye image sequence is acquired by an image acquisition device, and the acquiring a local detection area from the eye image of the to-be-detected frame based on the light spot comprises:

   determining a size parameter of the local detection area based on an acquisition frame rate of the image acquisition device;

determining the local detection area based on the light spot center of the eye image of the target frame and the size parameter of the local detection area.

5. The method according to claim 4, wherein the size of the local detection area is positively correlated with the inter-frame light spot moving distance.

6. The method according to any one of claims 1-5, further comprising:

detecting the local detection area using a grayscale centroid algorithm, and obtaining a pixel brightness of the first target position.

7. The method according to any one of claims 1-6, wherein the pixel brightness of the first target position is a brightness weighted value of a plurality of the first target positions, and the method further comprises:

detecting the local detection area using a plurality of light spot detection algorithms, and obtaining the brightness of the plurality of the first target positions;

weighting the brightness of the plurality of the first target positions, and obtaining the brightness weighted value of the first target positions.

8. The method according to any one of claims 1 to 7, wherein the determining a light spot recognition result of the eye image of the to-be-detected frame in response to a pixel brightness judgment result of a first target position located in the local detection area comprises:

if a pixel brightness of the first target position located in the local detection area satisfies a light spot center constraint condition, determining that the light spot recognition result includes: that the local detection area and a to-be-detected light spot have an intersection, wherein the to-be-detected light spot is a light spot of the eye image of the target frame that is tracked in the eye image of the to-be-detected frame;

if the pixel brightness of the first target position located in the local detection area does not satisfy the light spot center constraint condition, determining that the light spot recognition result includes: that the light spot of the eye image of the target frame disappears in the eye image of the to-be-detected frame.

9. The method according to any one of claims 1-8, wherein the number of light spots of the eye image of the target frame is multiple, and the method further comprises:

storing a plurality of light spot center coordinates of the eye image of the target frame in a light spot sequence array;

if the first target position located in the local detection area satisfies the light spot center constraint condition, updating the light spot center coordinates corresponding to the local detection area in the light spot sequence array using the coordinates of the first target position;

if the first target position located in the local detection area does not satisfy the light spot center constraint condition, occupying a position in the light spot sequence array corresponding to the local detection area using an empty array.

10. The method according to claim 8, wherein the light spot center constraint condition includes: that a difference between the pixel brightness of the first target position and a target brightness is greater than or equal to a brightness threshold; wherein the target brightness is a brightness determined by a pixel brightness of at least one second target position, the second target position being located at an edge of the local detection area.

11. The method according to claim 8, wherein a distance between the second target position and the first target position satisfies:

$d \leq d' \leq d_{max}$, where $d$ represents a distance between the first target position and a contour position of the local detection area, $d'$ represents a distance between the first target position and the second target position, and $d_{max}$ represents a maximum distance between the first target position and the second target position.

12. A light spot tracking apparatus, comprising:

an extraction module configured to extract an eye image of a target frame and an eye image of a to-be-detected frame from an eye image sequence, wherein the eye image of the target frame contains a light spot, and the acquisition time of the eye image of the target frame is earlier than the acquisition time of the eye image of the to-be-detected frame;

an acquisition module configured to acquire a local detection area from the eye image of the to-be-detected frame based on the light spot; and

a recognition module configured to determine a light spot recognition result of the eye image of the to-be-detected frame in response to a pixel brightness judgment result of a first target position located in the local detection area, wherein the first target position is a position with the highest brightness in the local detection area.

13. An electronic device, comprising:

at least one processor; and
a memory storing a program;
wherein the program comprises instructions, which, when executed by the processor, cause the processor to perform the method according to any one of claims 1 to 11.

14. A non-transitory computer-readable storage medium storing computer instructions, wherein the computer instructions are configured to cause the computer to perform the method according to any one of claims 1 to 11.

extracting an eye image of a target frame and an eye image of a to-be-detected frame from an eye image sequence, wherein the eye image of the target frame contains a light spot, and the acquisition time of the eye image of the target frame is earlier than the acquisition time of the eye image of the to-be-detected frame;

101

↓

acquiring a local detection area from the eye image of the to-be-detected frame based on the light spot;

102

↓

determining a light spot recognition result of the eye image of the to-be-detected frame in response to a pixel brightness judgment result of a first target position located in the local detection area, wherein the first target position is a position with the highest brightness in the local detection area

103

Fig.1

P₁

200

O

Fig. 2A

Fig. 2B

**300**    301

302    303

Fig. 3A

**300** G1

Fig. 3B

Fig. 4

**500**

Extraction
Module 501

Acquisition
Module 502

Recognition
Module 503

**Fig. 5**

**600**

Processor
601

604

Memory
603

Communication
Interface 602

**Fig. 6**

**700**

```
┌─────────────────┐      ┌─────────────────┐      ┌─────────────────┐
│ Computing Unit  │      │    ROM 702      │      │    RAM 703      │
│      701        │      │                 │      │                 │
└─────────────────┘      └─────────────────┘      └─────────────────┘
        ↕                        ↓                        ↕
◁═══════════════════════════════════════════════════════════════════▷
                                704
                                 ↕
┌───────────────────────────────────────────────────────────────────┐
│                      I/O Interface 705                             │
└───────────────────────────────────────────────────────────────────┘
        ↑                 ↓                 ↕                 ↕
┌─────────────┐  ┌─────────────────┐  ┌─────────────┐  ┌─────────────────┐
│ Input Unit  │  │ Output Unit 707 │  │ Storage Unit│  │ Communication   │
│    706      │  │                 │  │     708     │  │  Unit 709       │
└─────────────┘  └─────────────────┘  └─────────────┘  └─────────────────┘
```

**Fig. 7**

## INTERNATIONAL SEARCH REPORT

| International application No. |
| --- |
| **PCT/CN2023/132630** |

| **A.** | **CLASSIFICATION OF SUBJECT MATTER** |
| --- | --- |

G06T7/246(2017.01)i

According to International Patent Classification (IPC) or to both national classification and IPC

| **B.** | **FIELDS SEARCHED** |
| --- | --- |

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 部分, 光斑, 局部, 亮斑, 普尔钦斑, 亮度, 帧, 追随, 追踪, 跟随, 检测区, portion, facula, part, luminance, frame, follow, detect

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| PX | CN 115965653 A (BEIJING BYTEDANCE NETWORK TECHNOLOGY CO., LTD.) 14 April 2023 (2023-04-14)<br>claims 1-14 | 1-14 |
| A | CN 110191287 A (GUANGDONG OPPO MOBILE TELECOMMUNICATIONS CORP., LTD.) 30 August 2019 (2019-08-30)<br>claims 1-12, and description, paragraphs [0053]-[0162] | 1-14 |
| A | CN 112991393 A (BEIJING PENSEES TECHNOLOGY CO., LTD.) 18 June 2021 (2021-06-18)<br>entire document | 1-14 |
| A | CN 107506023 A (WUHAN SHOW BABY SOFTWARE CO., LTD.) 22 December 2017 (2017-12-22)<br>entire document | 1-14 |
| A | US 2011221919 A1 (ZHANG WENBO) 15 September 2011 (2011-09-15)<br>entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 January 2024** | **31 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/132630**

| Patent document cited in search report | | | Publication date (day/month/year) | Patent family member(s) | | | Publication date (day/month/year) |
|---|---|---|---|---|---|---|---|
| CN | 115965653 | A | 14 April 2023 | None | | | |
| CN | 110191287 | A | 30 August 2019 | None | | | |
| CN | 112991393 | A | 18 June 2021 | None | | | |
| CN | 107506023 | A | 22 December 2017 | None | | | |
| US | 2011221919 | A1 | 15 September 2011 | JP | 2011191298 | A | 29 September 2011 |
| | | | | CN | 102193651 | A | 21 September 2011 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211608969